# EUROPÄISCHE PATENTANMELDUNG

(11) **EP 1 609 355 A1**
(43) Veröffentlichungstag der Anmeldung: **28.12.2005**
(21) Anmeldenummer: 05013426.1
(22) Anmeldetag: 22.06.2005
(51) Int. Cl.: A01F 25/20, B65G 65/44

(54) **Lagerbehälter für Biomasse**

(30) Priorität: 24.06.2004 DE 202004009962 U
(71) Anmelder: Präzi-Fördertechnik Gesellschaft mit beschränkter Haftung, 49163 Bohmte (DE)
(72) Erfinder: Schmihiug, Günter, 49326 Melle (DE)
(74) Vertreter: Pott, Ulrich

(57) **Zusammenfassung**

Die vorliegende Erfindung bezieht sich auf einen Lagerbehälter (2) für Biomasse mit bodenseitigem Förderelement (4).

Um den Verschleiß und die Korrosion im Bodenbereich des Lagerbehälters (2) zu verringern, wird vorgeschlagen, die Bodenfläche (10) des Lagerbehälters (2) mit Kunststoffplatten (8) zu bedecken.

## Beschreibung

Die vorliegende Erfindung bezieht sich auf einen Lagerbehälter für Biomasse mit bodenseitigem Förderelement.

Die gattungsgemäßen Lagerbehälter werden insbesondere eingesetzt, um Biomasse für Biogasanlagen zu lagern. Als Biomasse kommen dabei die unterschiedlichsten Stoffe und Stoffmischungen in Betracht. Die Lagerbehälter dienen als Zwischenspeicher, um angelieferte Biomasse zu lagern und bedarfsweise der Biogasanlage zuzufördern. Um eine Abförderung der Biomasse zu bewerkstelligen, sind auf dem Boden des Lagerbehälters Förderelemente angebracht, wie Förderschnecken oder Schub- oder Zugböden.

Die vorbekannten Lagerbehälter weisen im Regelfall eine Bodenfläche auf, die aus Beton oder Metall besteht. Da das Gewicht der im Lagerbehälter befindlichen Biomasse auf das Förderelement drückt, reibt das Förderelement mit einem hohen Anpreßdruck über die Bodenfläche, wobei ein sehr hoher Verschleiß des Förderelements auftritt. Ein weiterer Nachteil der bekannten Lagerbehälter ist darin zu sehen, daß diese im Bodenbereich genauso einer starken Korrosion ausgesetzt sind wie die im Regelfall aus Metall hergestellten Förderelemente. Die Korrosion entsteht beispielsweise durch säurehaltige Biomasse, wie Maissilage, Stalldung oder Pflanzenreste.

Demgemäß ist es die Aufgabe der vorliegenden Erfindung, den Verschleiß und die Korrosion im Bodenbereich des Lagerbehälters zu verringern.

Die Aufgabe wird für einen gattungsgemäßen Lagerbehälter gelöst, indem die Bodenfläche des Lagerbehälters mit Kunststoffplatten bedeckt ist.

Durch die Kunststoffplatten entsteht eine ebene Fläche, die einen geringen Reibwiderstand aufweist. Die Förderelemente gleiten leichter über die Flächen der Kunststoffplatten. Infolgedessen ist der bewegungsbedingte Verschleiß verringert, und auch der Energieaufwand für den Antrieb der Förderelemente sinkt. Die Standzeiten der eingesetzten Bauteile sind länger, und der Reparaturaufwand sinkt, wodurch sich die Wirtschaftlichkeit der gesamten Biogasanlage erhöht. Die Kunststoffplatten können säurefest ausgebildet sein, so daß keine Korrosion der Bodenflächen mehr auftritt. Je nach Art des Kunststoffes, der für die Herstellung der Kunststoffplatten verwendet wird, können diese sehr verschleißfest ausgeführt werden. Bei einem irgendwann eingetretenen Verschleiß der Kunststoffplatten sind diese leicht und schnell gegen neue Kunststoffplatten austauschbar. Die Kunststoffplatten sind fest genug, um zur Befüllung des Lagerbehälters mit LKW befahren zu werden. Schließlich entstehen beim Betrieb des Förderelements vergleichsweise wenig Geräusche.

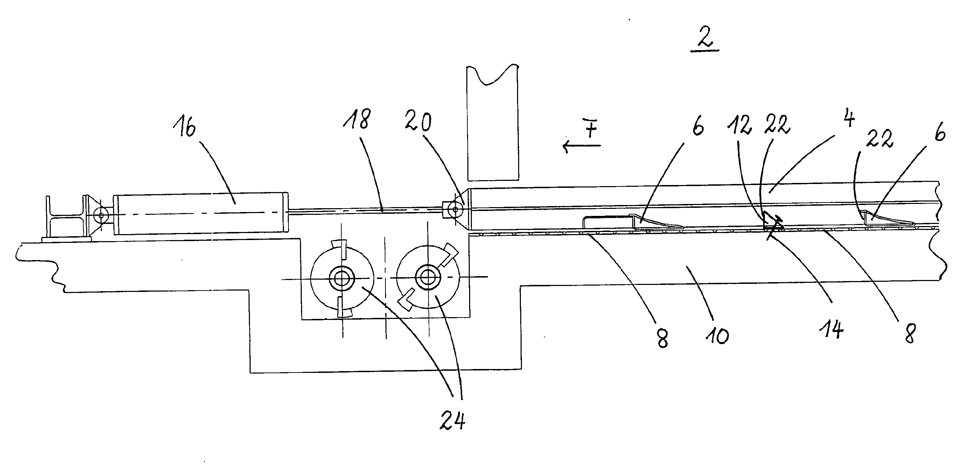

Weitere Ergänzungen und vorteilhafte Ausgestaltungen der Erfindung ergeben sich aus den Merkmalen der Unteransprüche, der Zeichnung und der nachfolgenden gegenständlichen Beschreibung.

In der Zeichnung ist ein Lagerbehälter 2 angedeutet, in dessen Bodenbereich ein Förderelement 4 angeordnet ist. In einem Lagerbehälter 2 können mehrere Förderelemente 4 nebeneinander angeordnet sein. Der Lagerbehälter 2 kann gemauerte oder betonierte Seitenwände aufweisen, oder die Seitenwände bestehen aus Metallplatten. Der Lagerbehälter 2 kann Hallen- oder eine Containergröße aufweisen. Auch der Boden kann aus steinernen oder metallischen Werkstoffen hergestellt sein. Das Förderelement 4 besteht aus einem Tragelement, an dem seitlich abstehende Förderarme 6 befestigt sind. Die in der Zeichnung in einer Querschnittsansicht dargestellten Förderarme 6 liegen mit ihrer Unterseite auf Kunststoffplatten 8 auf, die den Boden 10 bedecken. Die Kunststoffplatten 8 können den Boden 10 insbesondere vollflächig bedecken, so daß auch das Tragelement des Förderelements 4 auf den Kunststoffplatten 8 aufliegt und bei einer Förderbewegung auf diesen gleitet. Es hat sich bewährt, die Kunststoffplatten 8 mit einer Dicke von 6 - 15 mm auszubilden, da einerseits eine ausreichende Festigkeit und Dauerhaltbarkeit gewährleistet ist, andererseits aber die Kosten für die Kunststoffplatten 8 nicht zu hoch ausfallen. Um eine Entwässerung des Lagerbehälters 2 zu ermöglichen, können auf der Ober- und/oder Unterseite der Kunststoffplatten 8 Entwässerungskanäle vorhanden sein, die ein Ablaufen von Regen oder Flüssigkeiten aus der Biomasse ermöglichen. Es ist vorteilhaft, wenn die Bodenfläche des Lagerbehälters dazu ein Gefälle in Förderrichtung F aufweist.

Die Kunststoffplatten 8 können mit dem Boden verschraubt, vernagelt oder verklebt oder auf sonstige Weise lagefixiert sein, damit sie sich nicht durch Bewegungen des Förderelements 4 verschieben können. Nach einer anderen Ausgestaltung der Erfindung werden insbesondere im Bereich von Stoßkanten, an denen Kunststoffplatten 8 aneinanderstoßen, Fixierleisten 12 angebracht. Die Fixierleisten 12 überdecken bevorzugt die Stoßstellen, so daß sich darin kein Material der Biomasse ansammeln kann. Auch wird verhindert, daß sich Material der Biomasse in den Fugen verhakt und sodann bei Weiterbeförderung die Kunststoffplatten 8 aufreißt. Mittels der Fixierleisten 12 kann auch eine Art Abdichtung der Bodenfläche erzielt werden. Die Fixierleisten 12 können durch Befestigungsmittel 14 mit dem Boden 10 dauerhaft oder lösbar verbunden werden. Als Befestigungsmittel 14 kommen Schrauben, Dübel, Niete, Nägel und dergleichen in Betracht. Die Befestigungsmittel können von der Fixierleiste 12 durch eine Kunststoffplatte 8 hindurch in den Boden 10 geführt sein, so daß diese von den Befestigungsmitteln 14 mit lagefixiert wird, ohne daß dafür noch ein weiterer Arbeitsgang erforderlich wäre. Die Fixierleisten 12 sollten quer zur Förderrichtung F der Biomasse im Lagerbehälter 2 und zwischen zwei aufeinander folgenden Förderarmen 6 angebracht werden, damit durch die Fixierleisten 12 nicht die Hubbewegung des Förderelements 4 gestört wird.

Das Förderelement 4 entfaltet seine Förderwirkung, indem es von einem Antrieb, im Ausführungsbeispiel einem Hydraulikzylinder 16, hin und her bewegt wird. Der vom Hydraulikzylinder 16 ausgelöste Bewegungsimpuls wird von der Kolbenstange 18 auf die an dem Förderelement 4 befestigten Befestigungslasche 20 übertragen. Bei einer Hin- und Herbewegung des Hydraulikzylinders 16 bewegt sich so zwangsläufig auch das Förderelement 4 hin und her. Im gezeigten Ausführungsbeispiel zieht der Hydraulikzylinder 16 die Biomasse zu sich hin, deshalb wird diese Lösung auch als Zugboden bezeichnet, während ein schiebend angeordneter Antrieb als Schubboden anzusehen ist.

Um die Förderwirkung des Förderelements 4 zu unterstützen, können die Fixierleisten 12 wie auch die Förderarme 6 einen keilförmigen Querschnitt aufweisen, wie in der Zeichnung dargestellt. Die Fixierleisten 12 werden dann so in der Lagerbehälter 2 eingebaut, daß das Förderelement 4 mit einer Förderbewegung in Förderrichtung F Biomasse über die ansteigende Rampe der Fixierleiste bis zum obersten Punkt hinüberschieben kann, bis die beförderte Biomasse von dort herunterfällt. Von dort ist eine Rückförderung der Biomasse nicht möglich, weil diese in dieser Richtung durch die im wesentlichen senkrechte Förderfläche 22, die als stumpfe Seite in Förderrichtung weist, der Fixierleiste 12 blockiert wird. Die Biomasse bleibt also in Förderrichtung gesehen hinter der Fixierleiste 12 liegen, um von dort von einem Förderarm 6 weiter in Förderrichtung befördert zu werden.

Durch die keilförmige Grundgestalt der Förderarme 6 können diese bei einer der Förderrichtung F entgegengesetzten Bewegung des Förderelements 4 mit der spitz zulaufenden Kante die Biomasse untergreifen, während die Förderfläche 22 bei einer Bewegung des Förderelements 4 in Förderrichtung F als stumpfe Seite das Material der Biomasse ergreift und zwangsweise in die Förderrichtung F bewegt. Eine kraftarme Unterschneidung der Biomasse wird möglich, wenn die schräg ansteigende Fläche der Förderarme 6 nicht konstant ansteigend und eben ausgestaltet ist, sondern in einem vorderen Abschnitt zunächst flacher bleibt, um eine gute Schneidwirkung zu erzielen, und in einem hinteren Abschnitt dann steiler ansteigt, um die abgetrennte Biomasse anzuheben. Der Förderarm 6 ist also mit einer Art konvex gebogenen oder in Stufen gekanteten Oberfläche versehen. Es ergibt sich so eine Art Schürfform.

Eine gute Förderwirkung des Förderelements 4 ergibt sich, wenn der Abstand der Förderarme 6 voneinander, der Hubweg des Förderelements 4 und die eventuell zusätzlich vorgesehene Plazierung der Fixierleisten 12 gut aufeinander abgestimmt sind. Der Hubweg des Antriebs 16 und der Abstand zwischen Förderarmen 6 sollten sich in etwa mindestens entsprechen, so daß sich keine Totzonen ergeben, die von keinem Förderarm 6 erreicht werden.

Um eine gute Befahrbarkeit mit LKW sicherzustellen, können die Förderelemente 4 jeweils in einem Abstand von 1,50 m zueinander angeordnet sein. Die LKWs müssen dann nicht auf den stärker hervorstehenden Tragelementen der Förderelemente 4 rollen, sondern können über die flacher ausgebildeten Förderarme 6 fahren. Bevorzugt sollte dann das Zufahrtstor, durch das die LKW in den Lagerbehälter 2 einfahren, an der der Förderrichtung F abgewandten Seite des Lagerbehälters 2 liegen. Natürlich kann der Lagerbehälter auch auf andere geeignete und an sich bekannte Weise befüllt werden.

Am Abgabeende des Lagerbehälters 2 fällt die beförderte Biomasse in den Wirkbereich der Förderschnecken 24, die die Biomasse dann der Biogasanlage zufördern.

## Patentansprüche

1. Lagerbehälter (2) für Biomasse mit bodenseitigem Förderelement (4), **dadurch gekennzeichnet, daß** die Bodenfläche des Lagerbehälters (2) mit Kunststoffplatten (8) bedeckt ist.

2. Lagerbehälter (2) nach Anspruch 1, **dadurch gekennzeichnet, daß** die Förderarme (6) des Förderelementes (4) auf der Oberfläche der Kunststoffplatten (8) gleiten.

3. Lagerbehälter (2) nach Anspruch 1 oder 2, **dadurch gekennzeichnet, daß** im Bereich von Stoßkanten der Kunststoffplatten (8) Fixierleisten (12) angebracht sind.

4. Lagerbehälter (2) nach Anspruch 3, **dadurch gekennzeichnet, daß** die Fixierleisten (12) einen keilförmigen Querschnitt aufweisen und die Fixierleisten (12) so angeordnet sind, daß die Förderfläche (22) in Förderrichtung weist.

5. Lagerbehälter (2) nach Anspruch 3 oder 4, **dadurch gekennzeichnet, daß** die Fixierleisten (12) durch Befestigungselemente (14) mit dem Boden (10) verbunden sind.

6. Lagerbehälter (2) nach einem der Ansprüche 3 bis 5, **dadurch gekennzeichnet, daß** die Fixierleisten (12) quer zur Förderrichtung des Förderelements (4) und zwischen zwei in Förderrichtung aufeinanderfolgenden Förderarmen (6) des Förderelements (4) angeordnet sind.

7. Lagerbehälter (2) nach einem der vorhergehenden Ansprüche, **dadurch gekennzeichnet, daß** die Förderarme (6) des Förderelementes (4) einen im wesentlichen keilförmigen Querschnitt aufweisen, wobei die schräg ansteigende Fläche nicht eben ausgebildet ist.

8. Lagerbehälter (2) nach einem der vorhergehenden Ansprüche, **dadurch gekennzeichnet, daß** die Kunststoffplatten (8) eine Dicke von 6 - 12 mm aufweisen.

9. Lagerbehälter (2) nach einem der vorhergehenden Ansprüche, **dadurch gekennzeichnet, daß** die Kunststoffplatten (8) auf ihrer Ober- und/oder Unterseite Entwässerungskanäle aufweisen.
